# EUROPÄISCHE PATENTSCHRIFT

(11) **EP 3 766 633 B1**
(45) Veröffentlichungstag und Bekanntmachung des Hinweises auf die Patenterteilung: **07.06.2023**
(21) Anmeldenummer: 20175413.2
(22) Anmeldetag: 19.05.2020
(51) Int. Cl.: B23Q 11/10, B23Q 17/09

(54) **VORRICHTUNG ZUR ÜBERWACHUNG EINER ARBEITSSPINDEL**
DEVICE FOR MONITORING A WORK SPINDLE
DISPOSITIF DE SURVEILLANCE D'UNE BROCHE DE TRAVAIL

(30) Priorität: 18.07.2019 DE 102019119544
(43) Veröffentlichungstag der Anmeldung: 20.01.2021
(73) Patentinhaber: Ott-Jakob Spanntechnik GmbH, 87663 Lengenwang (DE)
(72) Erfinder: Greif, Josef, 87496 Friesenried (DE); Bonerz, Stefan, 87616 Marktoberdorf (DE); Mohr, Peter, 87487 Wiggensbach (DE); Hartmann, Stefan, 87663 Lengenwang (DE)
(74) Vertreter: Charrier Rapp & Liebau

(56) Entgegenhaltungen:
- EP-A1- 3 241 650
- DE-A1- 3 403 896
- US-A- 4 744 242

## Beschreibung

Die Erfindung betrifft eine Vorrichtung zur Überwachung einer Arbeitsspindel nach dem Oberbegriff des Anspruchs 1. Eine derartige Vorrichtung ist aus der EP 3 241 650 A1 bekannt. Überwacht wird dort der Spannzustand des Werkzeugs mittels zweier Positionssensoren, welche an der Spannvorrichtung zum Spannen des Werkzeugs die axialen Positionen des Kolbens einer hydraulischen Löseeinheit und einer mittels dieses Kolbens betätigbaren Spannstange überwachen.

Die DE 34 03 896 A1 lehrt ein Verfahren zur Überwachung der feindosierten Mediumabgabe bei automatisch arbeitenden Dosiergeräten, bei denen das mittels Druckluft dosiert auf Oberflächen aufzutragende Medium diskontinuierlich aus Düsen abgegeben wird. Der beim Austritt des Mediums aus der Düsenmündung bzw. beim Aufschlag desselben auf die zu benetzende Oberfläche entstehende Schall wird elektronisch erfasst und in Abhängigkeit dieses Parameters der Istwert mit dem Sollwert verglichen sowie, je nach Schallintensität, die erfolgte oder unterbliebene Mediumabgabe festgestellt. Der bei der Mediumabgabe erzeugte Schall breitet sich im freien Raum in der Umgebung der Düse aus und wird von einem elektroakustischen Sensor aufgenommen, der neben der Düse angeordnet ist.

Die US 4,744,242 behandelt eine Methode zur Überwachung der Abnutzung eines Schneidwerkzeugs während der Werkstückbearbeitung anhand von akustischen Signalen oder anhand von Vibrationssignalen. Hierzu sind bei einer Ausführungsform im Bearbeitungsraum einer Werkzeugmaschine nahe dem Werkzeug Mikrofone angeordnet, welche bei der Einwirkung des Werkzeugs auf das Werkstück entstehende akustische Signale aufnehmen. Bei einer anderen Ausführungsform sind am Lager der Spindel der Werkzeugmaschine mehrere Beschleunigungssensoren angeordnet, welche Vibrationssignale aufnehmen. Mittels elektronischer Signalverarbeitung werden aus diesen Signalen Indizien für den Verschleißzustand des Werkzeugs gewonnen.

Ausgehend von diesem Stand der Technik ist es die Aufgabe der Erfindung, eine Vorrichtung zur Überwachung einer Arbeitsspindel zu schaffen, durch die weitere für die Werkstückbearbeitung relevante Zustandsparameter der Arbeitsspindel oder eines an ihr gespannten Werkzeugs erfasst werden können, und die mit geringem Aufwand in die Arbeitsspindel integriert werden kann.

Diese Aufgabe wird erfindungsgemäß durch eine Vorrichtung mit den Merkmalen des Anspruchs 1 gelöst. Vorteilhafte Ausgestaltungen sind in den Unteransprüchen angegeben.

Erfindungsgemäß weist eine Vorrichtung zur Überwachung einer Arbeitsspindel, mit einer Spannvorrichtung zur Spannung eines Werkzeugs an einem vorderen Ende der Arbeitsspindel, welche einen in der Axialrichtung der Arbeitsspindel verlaufenden Kanal zur Zufuhr einer Flüssigkeit zu einem gespannten Werkzeug aufweist, und mit einer an einem hinteren Ende der Spannvorrichtung angeordneten Einspeisungsvorrichtung zur Einspeisung der Flüssigkeit in den Kanal, die Vorrichtung einen an der Einspeisungsvorrichtung angeordneten Sensor zur Erfassung eines sich in dem Kanal ausbreitenden akustischen Signals auf, dass die Vorrrichtung einen Speicher aufweist, in welchem Kalibrationsdaten gespeichert sind, die mittels des Sensors in verschiedenen vorbestimmten funktionalen Zuständen der Einspeisungsvorrichtung und mindestens eines durch die Spannvorrichtung an der Arbeitsspindel gespannten Werkzeugs erfasst wurden. Ferner weist die Vorrichtung eine mit dem Sensor verbundene Auswertungseinrichtung auf, die zur Ableitung einer Information über den funktionalen Zustand der Einspeisungsvorrichtung und/oder des gespannten Werkzeugs aus dem durch den Sensor erfassten akustischen Signal anhand eines Vergleichs von Parametern dieses Signals mit den gespeicherten Kalibrationsdaten eingerichtet ist.

Der Erfindung liegt die Erkenntnis zugrunde, dass der funktionale Zustand der Einspeisungsvorrichtung und des Werkzeugs die Ausbreitung und/oder die Reflexion eines akustischen Signals in dem Kanal beeinflusst und daher durch einen an dem Kanal angeordneten akustischen Sensor in Verbindung mit einer geeigneten Signalverarbeitung eine Information über besagten funktionalen Zustand ermittelt werden kann. Auf diese Weise kann eine Vielzahl verschiedener für die Werkstückbearbeitung relevanter Zustandsparameter einer Arbeitsspindel oder eines an ihr gespannten Werkzeugs überwacht werden, ohne dass hierzu ein größerer Eingriff in die Konstruktion der Spannvorrichtung vorgenommen werden muss, da die Einspeisungsvorrichtung an einem hinteren Ende der Spannvorrichtung angeordnet ist und der Sensor somit am hinteren Ende der Spannvorrichtung angebracht werden kann, wodurch sich eine Modifikation anderer Komponenten der Spannvorrichtung, insbesondere solcher, die sich im Inneren der Arbeitsspindel befinden, erübrigt.

Vorzugsweise ist die Einspeisungsvorrichtung eine an der Spannvorrichtung befestigbare Drehdurchführung mit einem im Betrieb der Arbeitsspindel nicht rotierenden hinteren Abschnitt und einem im Betrieb der Arbeitsspindel mit der Spannvorrichtung rotierenden vorderen Abschnitt, die einen sich in beiden Abschnitten erstreckenden und am Übergang zwischen den beiden Abschnitten durch eine Dichtung abgedichteten koaxialen Endabschnitt des Kanals bilden, und der Sensor ist an dem hinteren Abschnitt der Drehdurchführung angeordnet. Der Sensor rotiert somit im Betrieb der Arbeitsspindel nicht und kann mittels elektrischer Leitungen üblicher Art mit der Auswertungseinrichtung verbunden werden. Zur Kommunikation des Sensors mit der Auswertungseinrichtung ist weder eine Funkverbindung nötig, noch müssen hierzu elektrische Leitungen in das Innere der Arbeitsspindel verlegt werden.

Der Sensor kann ein passiver Sensor sein, mittels dessen ein sich in dem Kanal ausbreitendes akustisches Signal erfassbar ist. In diesem Fall erfasst der Sensor akustische Signale, die bei einem Bearbeitungsvorgang entstehen und sich in der Flüssigkeit in dem Kanal ausbreiten. Der Sensor kann aber auch ein aktiver Sensor sein, mittels dessen ein akustisches Signal in den Kanal einkoppelbar und ein aus dem Kanal zu dem Sensor reflektiertes akustisches Signal erfassbar ist. Im letztgenannten Fall ist das durch den Sensor in den Kanal einkoppelbare Signal zweckmäßigerweise ein Impuls. Wenn dieser kurz genug ist, um eine zeitliche Überlappung der Abstrahlung und des Empfangs des Reflexionssignals zu vermeiden, vereinfacht sich hierdurch die Verarbeitung des Sensorsignals.

Die zum Vergleich mit gespeicherten Kalibrationsdaten vorgesehenen Parameter des erfassten akustischen Signals sind vorzugsweise Parameter seines Frequenzspektrums. Dieses weist nämlich Merkmale auf, die vom funktionalen Zustand des Werkzeugs und/oder der Einspeisungsvorrichtung, mittels derer Kühlschmiermittel für die Werkstückbearbeitung in den Kanal eingespeist wird, abhängen und dadurch eine Identifikation bestimmter funktionaler Zustände ermöglichen. Eine Spektralanalyse eines Sensorsignals kann mit den Methoden der digitalen Signalverarbeitung, insbesondere in Form einer FFT unter Verwendung eines digitalen Signalprozessors mit relativ geringem Aufwand durchgeführt werden. Als Parameter des Frequenzspektrums, anhand derer besagte funktionale Zustände identifizierbar sind, kommen insbesondere der Amplitudenverlauf oder einzelne Amplitudenwerte in mindestens einem vorbestimmten Frequenzband in Betracht.

Die erfindungsgemäß ermittelbare Information über den funktionalen Zustand kann insbesondere eine Information über das Vorliegen eines Werkzeugdefekts, eine Information über einen Defekt der Dichtung der Drehdurchführung oder eine Information über einen Defekt einer an dem hinteren Abschnitt der Drehdurchführung angeschlossenen Zufuhrleitung zur Zufuhr von Flüssigkeit von einer Flüssigkeitsquelle zu der Drehdurchführung enthalten. Diese Informationen betreffen Defekte, die sofort behoben werden müssen, da sie die Qualität der Werkstückbearbeitung in Frage stellen.

Die erfindungsgemäß ermittelbare Information über den funktionalen Zustand kann aber auch eine Information über die aktuelle Eindringtiefe eines als Werkzeug gespannten Bohrers in einem Werkstück, eine Information über die Form des Werkzeugs, insbesondere dessen Länge und/oder Durchmesser, oder eine Information über eine Biegebelastung des Werkzeugs enthalten. Diese Arten von Information betreffen den Status der Werkstückbearbeitung, ohne dass ein Defekt vorliegen muss. So kann eine Biegebelastung zwar eine Folge einer fehlerhaften Werkzeug- oder Werkstückspannung sein, doch kann eine Biegebelastung des Werkzeugs bei bestimmten Bearbeitungsvorgängen auch normal sein. Anhand einer Information über die Form des Werkzeugs kann überwacht werden, ob für das den aktuellen Bearbeitungsvorgang richtige Werkzeug gespannt wurde.

Nachfolgend wird ein Ausführungsbeispiel der Erfindung unter Bezugnahme auf die Zeichnungen beschrieben. In diesen zeigt
- Fig. 1: eine Längsschnittansicht einer Arbeitsspindel mit einer Werkzeugspannvorrichtung, einem Werkzeug und einer Einspeisungsvorrichtung für Kühlschmiermittel,
- Fig. 2: eine vergrößerte Längsschnittansicht einer mit einem akustischen Sensor ausgerüsteten Einspeisungsvorrichtung,
- Fig. 3: ein Frequenzspektrum der akustischen Impedanz des Kühlschmiermittelkanals in einem ersten funktionalen Zustand des Werkzeugs und der Einspeisungsvorrichtung,
- Fig. 4: ein Frequenzspektrum der akustischen Impedanz des Kühlschmiermittelkanals in einem zweiten funktionalen Zustand,
- Fig. 5: ein Frequenzspektrum der akustischen Impedanz des Kühlschmiermittelkanals in einem dritten funktionalen Zustand,
- Fig. 6: ein Frequenzspektrum der akustischen Impedanz des Kühlschmiermittelkanals in einem vierten funktionalen Zustand,
- Fig. 7: ein Frequenzspektrum der akustischen Impedanz des Kühlschmiermittelkanals in einem fünften funktionalen Zustand,
- Fig. 8: eine schematische Darstellung dreier verschiedener Phasen eines Bohrvorgangs,
- Fig. 9: Frequenzspektren der Amplitude eines akustischen Reflexionssignals für die drei Phasen eines Bohrvorgangs von Fig. 8 und
- Fig. 10: Frequenzspektren der akustischen Impedanz für drei verschiedene, einer Biegebelastung entsprechende Längen eines Werkzeugs.

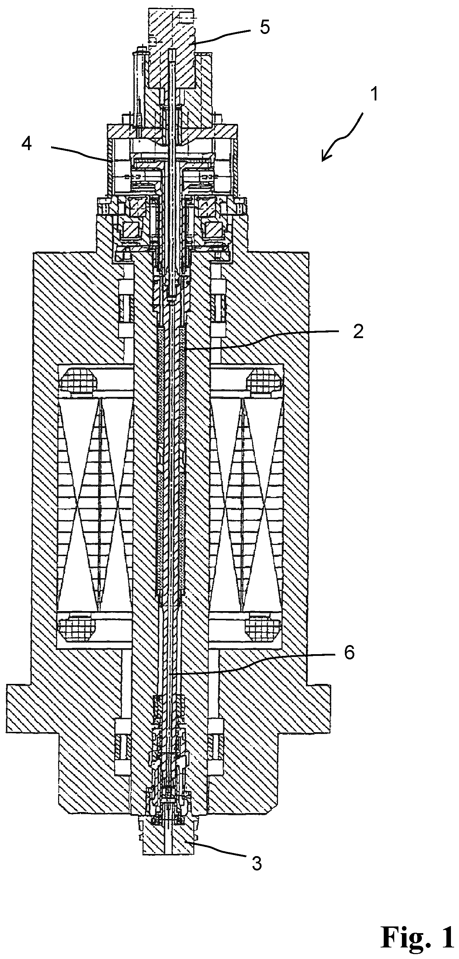

Fig. 1 zeigt eine teilweise Längsschnittansicht einer Arbeitsspindel 1, an deren vorderem Ende mittels einer im Inneren der Arbeitsspindel 1 angeordneten und sich mittig in axialer Richtung durch die gesamte Arbeitsspindel 1 hindurch erstreckenden Spannvorrichtung 2 ein Werkzeug 3 gespannt ist. Im Bereich des hinteren Endes der Arbeitsspindel 1 befindet sich eine Löseeinheit 4 der Spannvorrichtung 2, mittels derer die Spannvorrichtung 2 zum Lösen des Werkzeugs 3 betätigt werden kann. Die Arbeitsspindel 1 ist Bestandteil einer nicht dargestellten Bearbeitungsmaschine, insbesondere einer Werkzeugmaschine. Am hinteren Ende der Arbeitsspindel 1 ist an dieser eine Drehdurchführung 5 zur Einspeisung eines Kühlschmiermittels in einen Kanal 6 im Inneren der Spannvorrichtung 2, der sich über deren gesamte Länge erstreckt, befestigt. Das Kühlschmiermittel wird durch den Kanal 6 bis zu dem Werkzeug 3 geleitet, welches mindestens eine Austrittsöffnung aufweist, durch welche das Kühlschmiermittel zum Kontaktbereich des Werkzeugs 3 mit einem in Fig. 1 nicht dargestellten Werkstück gelangt.

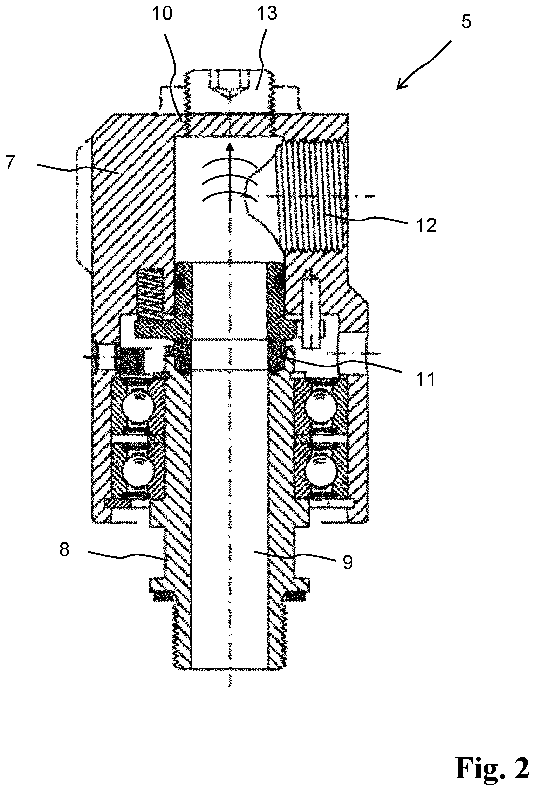

Eine vergrößerte Längsschnittansicht der Drehdurchführung 5 ist in Fig. 2 gezeigt. Im fertig montierten Zustand ist ein hinterer Abschnitt 7 der Drehdurchführung 5 mit einem im Betrieb der Arbeitsspindel 1 nicht rotierenden Teil der Spannvorrichtung 2 verbunden, während ein vorderer Abschnitt 8 mit einem rotierenden Teil der Spannvorrichtung 2 verbunden ist. Um dies zu ermöglichen, ist der vordere Abschnitt 8 in dem hinteren Abschnitt 7 drehbar gelagert, wie in Fig. 2 erkennbar ist. Im Inneren bildet die Drehdurchführung 5 einen hinteren Endabschnitt 9 des Kanals 6, der sich bis zur einer Endwandung 10 des hinteren Abschnitts 7 der Drehdurchführung 5 erstreckt. Am hinteren Ende des vorderen Abschnitts 8 der Drehdurchführung 5 ist eine Drehdichtung 11 angeordnet, welche den Endabschnitt 9 des Kanals 6 am Übergang zwischen den beiden relativ zueinander drehbaren Abschnitten 7 und 8 der Drehdurchführung 5 abdichtet.

Der hintere Abschnitt 7 der Drehdurchführung 5 weist eine in radialer Richtung verlaufende Gewindebohrung 12 auf, an der eine in den Figuren nicht gezeigte Schlauchleitung zur Zufuhr von Kühlschmiermittel in den Endabschnitt 9 des Kanals 2 angeschlossen werden kann. In der Endwandung 10 des hinteren Abschnitts 7 der Drehdurchführung 5 ist ein Sensor 13 zur Erfassung eines akustischen Signals aus dem Endabschnitt 9 des Kanals 6 angeordnet. Ein auf den Sensor 13 einfallendes akustisches Signal ist in Fig. 2 nahe dem hinteren Ende des Endabschnitts 9 des Kanals 6 angedeutet.

Der Sensor 13 kann ein rein passiver akustischer Sensor 13 sein. In diesem Fall kann es sich bei dem von ihm erfassten akustischen Signal nur um ein Signal handeln, das durch die Bearbeitung eines Werkstücks durch das Werkzeug 3 entsteht, von dem Werkzeug 3 auf die Flüssigkeit in dem Kanal 6 übertragen wird und sich entlang des Kanals 6 bis in dessen Endabschnitt 9 ausbreitet. Alternativ kann der Sensor 13 auch ein aktiver Sensor 13 sein, der ein akustisches Signal in den Endabschnitt 9 des Kanals 6 aussendet und ein zu ihm reflektiertes Signal erfasst. In diesem Fall hat das ausgesendete Signal zweckmäßigerweise die Form eines Impulses, der so kurz ist, dass der Sensor 13 rechtzeitig vom Sendebetrieb in den Empfangsbetrieb umgeschaltet werden kann, bevor das reflektierte Signal auf ihn einfällt. Eine geeignete Art von Sensor 13 ist ein piezoelektrisches Element, das bekanntlich sowohl als elektroakustischer Sensor als auch als elektroakustischer Aktor verwendbar ist. Denkbar wäre auch ein aktiver Sensor 13 mit einem elektroakustischen Aktorelement und einem davon separaten elektroakustischen Sensorelement, wobei auch in diesem Fall ein kurzer Impuls als zweckmäßigste Form eines Sendesignals erscheint, um das reflektierte Signal von dem Sendesignal zeitlich zu separieren.

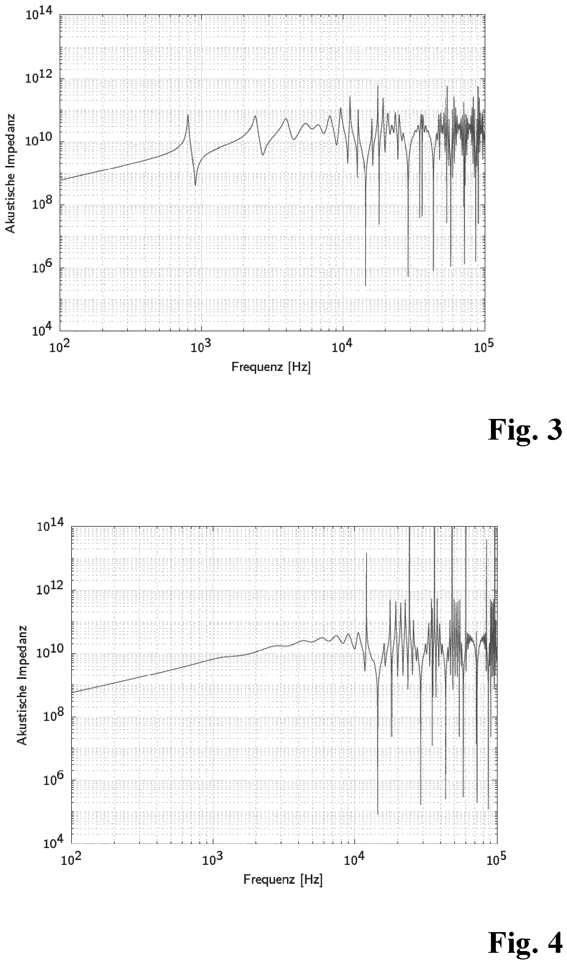

Das Übertragungs- und/oder Reflexionsverhalten des Kanals 6 einschließlich seines Endabschnitts 9 werden von verschiedenen funktionalen Zuständen verschiedener Komponenten des aus der Spannvorrichtung 2, dem Werkzeug 3, der Drehdurchführung 5 und einer an dieser angeschlossenen Leitung zur Zufuhr von Kühlschmiermittel bestehenden Systems beeinflusst. Dies wird nachfolgend beispielhaft anhand der Figuren 3 bis 9 aufgezeigt.

Von diesen Figuren zeigt Fig. 3 ein berechnetes Frequenzspektrum der akustischen Impedanz am Ort des Sensors 13 für den Fall, dass mittels der Spannvorrichtung 2 ein Werkzeug 3 einer bestimmten Form gespannt ist, der Kanal 6 einschließlich seines Endabschnitts 9 mit einer bestimmten Flüssigkeit gefüllt ist, die Dichtung 11 intakt ist und an der Gewindebohrung 12 eine Schlauchleitung angeschlossen ist, über welche die Flüssigkeit mit einem bestimmten Druck zugeführt wird. Die akustische Impedanz ist ein charakteristischer Parameter des durch den flüssigkeitsgefüllten Kanal 6 einschließlich seines Endabschnitts 9 und der Gewindebohrung 12 gebildeten akustischen Systems, der sich auch im Frequenzspektrum eines von dem Sensor 13 erfassten akustischen Signals widerspiegelt. Letzteres gilt sowohl für einen passiven, als auch für einen aktiven akustischen Sensor 13. Auch die folgenden Figuren 4 bis 7 zeigen jeweils berechnete Frequenzspektren der akustischen Impedanz am Ort des Sensors 13.

Fig. 4 zeigt das Frequenzspektrum für den Fall, dass als einzige Abweichung von dem Fig. 3 zugrunde liegenden Normalzustand das Werkzeug 3 gebrochen ist. Man erkennt in Fig. 4 ohne weiteres im Vergleich zu Fig. 3 das Fehlen charakteristischer Kombinationen von Maxima und Minima etwas unterhalb von 1 kHz sowie zwischen 2 und 3 KHz, welches somit ein klares Indiz für einen Werkzeugbruch darstellt. Zur Erkennung eines Werkzeugbruchs kann die Abweichung eines gemessenen Frequenzspektrums von einem Referenzspektrum, wie es Fig. 3 zeigt, beispielsweise mittels nichtlinearer Regressionsanalyse innerhalb eines bestimmten Frequenzbereiches, in dem bei der fraglichen Art von Defekt charakteristische Abweichungen zu erwarten sind, bewertet werden und das Bewertungsergebnis mit einem Schwellwert verglichen werden.

Als Werkzeugbruch wurde zwar für die Fig. 4 zugrunde liegende Berechnung ein vollständiger Bruch mit einer signifikanten Verkürzung des Werkzeugs 3 angenommen, doch ist unter einem Werkzeugbruch keineswegs nur ein vollständiger Bruch zu verstehen, sondern auch ein kleinerer Bruch an einer Schneidkante, denn ein solcher hat ebenfalls eine Änderung der akustischen Chartakteristik des Werkzeugs zur Folge. Insbesondere verändert sich durch einen Schneidkantenbruch das Spektrum der akustischen Emission beim Kontakt der Schneidkanten des Werkzeugs 3 mit dem Werkstück. Es leuchtet ein, dass auch die Detektion eines Schneidkantenbruchs von Interesse ist, weil die Bearbeitungsqualität hiervon beeinträchtigt wird.

Hierzu wird eine Datenbank mit für den Normalzustand und für bestimmte zu detektierende Defekte wie beispielsweise Werkzeugbruch charakteristischen Frequenzspektren als Vergleichsreferenzen benötigt, die anhand von Kalibrierungsmessungen erstellt werden muss. Die Möglichkeit der Erkennung eines funktionalen Zustandes durch Bewertung der Ähnlichkeit eines gemessenen Frequenzspektrums mit verschiedenen Referenzspektren, die in einer anhand von Kalibrierungsmessungen erstellten Datenbank gespeichert sind, gilt nicht nur für einen Werkzeugbruch, sondern für eine Vielzahl von funktionalen Zuständen, von denen einige nachfolgend beispielhaft behandelt werden.

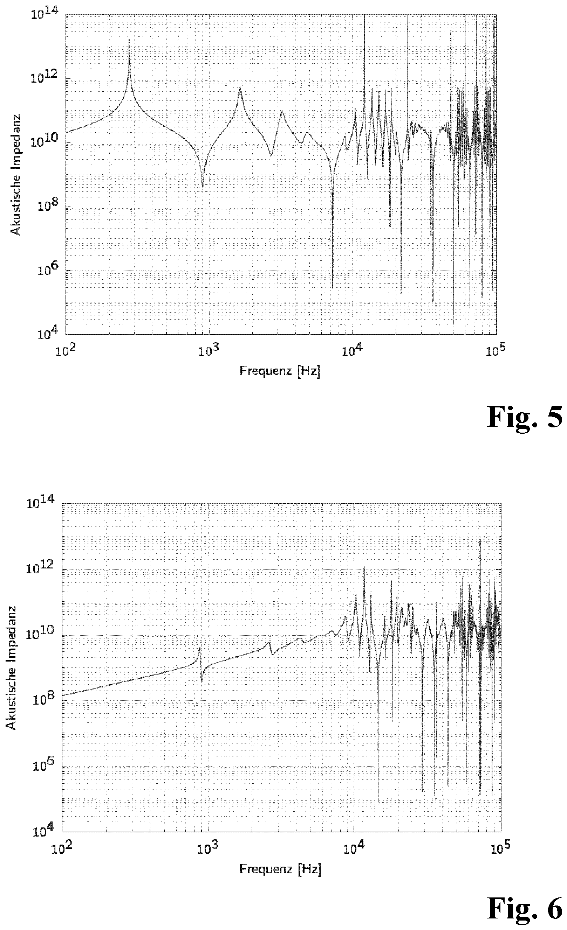

Fig. 5 zeigt das Frequenzspektrum für den Fall, dass als einzige Abweichung von dem Fig. 3 zugrunde liegenden Normalzustand die Gewindebohrung 12 an ihrem äußeren Ende blockiert ist. Dies entspricht in der Wirkung näherungsweise einem Defekt in Form einer Blockade einer an der Gewindebohrung 12 zur Zufuhr von Kühlschmiermittel angeschlossenen Schlauchleitung, insbesondere durch Knickung derselben. Man erkennt in Fig. 5 ohne weiteres im Vergleich zu Fig. 3 das Auftreten charakteristischer Maxima etwas unterhalb von 200 Hz sowie etwas unterhalb von 2 KHz, welche im Normalzustand nicht vorhanden sind und somit ein klares Indiz für eine Blockade besagter Schlauchleitung darstellen. Diese Maxima sind bei einem Werkzeugbruch nicht vorhanden, wie aus Fig. 4 zu ersehen ist, so dass die Defekte eines Werkzeugbruchs und einer Blockade der Schlauchleitung anhand des erfassten Frequenzspektrums voneinander unterschieden werden können und somit eine differenzierte Diagnose, d.h. eine Identifikation eines vorliegenden Defekts möglich ist.

Fig. 6 zeigt das Frequenzspektrum für den Fall, dass als einzige Abweichung von dem Fig. 3 zugrunde liegenden Normalzustand die Dichtung 11 zwischen dem feststehenden hinteren Abschnitt 7 und dem im Betrieb rotierenden vorderen Abschnitt 8 der Drehdurchführung 5 defekt ist und der Endabschnitt 9 des Kanals 6 an dieser Stelle einen radialen Spalt aufweist. Man erkennt im Vergleich zu Fig. 3, dass die für den Normalzustand charakteristischen Kombinationen von Maxima und Minima etwas unterhalb von 1 kHz sowie zwischen 2 und 3 KHz zwar noch vorhanden sind, die jeweilige Differenz zwischen dem Maximum und dem ihm benachbarten Minimum jedoch wesentlich kleiner ist. Anhand dieser Änderung des Frequenzspektrums kann somit ein Defekt der Dichtung 11 erkannt und auch von anderen Defekten unterschieden werden, wie ein Vergleich von Fig. 6 mit den Figuren 4 und 5 erweist.

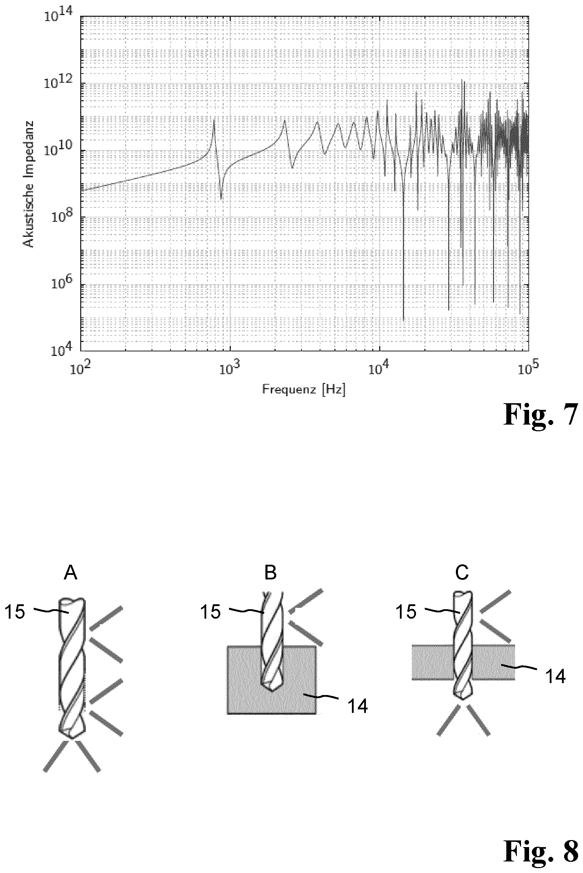

Fig. 7 zeigt das Frequenzspektrum für den Fall, dass als einzige Abweichung von dem Fig. 3 zugrunde liegenden Normalzustand das gespannte Werkzeug 3 einen anderen Durchmesser hat. Im Gegensatz zu den vorausgehend anhand der Figuren 4 bis 6 erläuterten Situationen bedeutet dies nicht, dass ein Defekt vorliegt. Man erkennt im Vergleich zu Fig. 3, dass die für den Normalzustand charakteristischen Kombinationen von Maxima und Minima etwas unterhalb von 1 kHz sowie zwischen 2 und 3 KHz weitgehend unverändert vorhanden sind, jedoch zwischen 5 und 7 KHz sowie zwischen 30 und 50 KHz wesentlich stärker ausgeprägte Maxima vorhanden sind. Anhand von Unterschieden im gemessenen Frequenzspektrum kann also auch zwischen verschiedenen Werkzeugen 3 unterschieden und somit geprüft werden, ob das für einen bestimmten Bearbeitungsvorgang richtige Werkzeug 3 gespannt ist, bevor mit der Bearbeitung begonnen wird. Eine fehlerhafte Bearbeitung durch Verwendung eines falschen Werkzeugs 3 kann hierdurch vermieden werden.

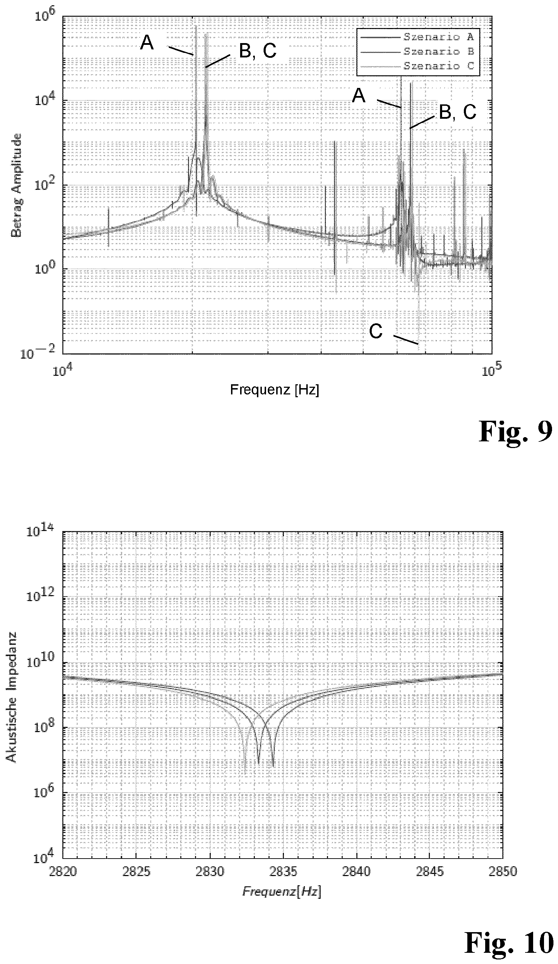

Eine weitere mögliche Funktion der Erfindung veranschaulichen die Figuren 8 und 9. Von diesen zeigt Fig. 8 drei verschiedene Phasen einer Bearbeitung eines Werkstücks 14 durch ein Bohrwerkzeug 15. In der mit A gekennzeichneten Phase befindet sich das Bohrwerkzeug 15 noch nicht in Kontakt mit dem Werkstück 14, so dass das ihm durch den Kanal 6 zugeführte Kühlschmiermittel an allen dafür vorgesehenen Austrittsöffnungen austreten kann, wie es in Fig. 9 durch von dem Werkzeug 15 ausgehende Linien, welche Strahlen des Kühlschmiermittels darstellen sollen, angedeutet ist. In der mit B gekennzeichneten Phase befindet sich ein vorderer Abschnitt des Bohrwerkzeugs 15 in dem entstehenden Bohrloch in dem Werkstück 14, so dass das durch den Kanal 6 zugeführte Kühlschmiermittel nur noch an Austrittsöffnungen im hinteren Bereich der Bohrwerkzeugs 15 austreten kann, während die Austrittsöffnungen im vorderen Bereich weitgehend blockiert sind. In der mit C gekennzeichneten Phase befindet sich nach dem Durchgang der Bohrung durch das Werkstück 14 ein vorderer Abschnitt des Bohrwerkzeugs 15 auf der anderen Seite des Werkstücks 14, wodurch die Austrittsöffnungen an der Spitze des Bohrwerkzeugs 15 wieder frei sind und das durch den Kanal 6 zugeführte Kühlschmiermittel dort und an Austrittsöffnungen im hinteren Bereich der Bohrwerkzeugs 15 austreten kann, während die seitlichen Austrittsöffnungen im vorderen Bereich noch immer weitgehend blockiert sind.

Fig. 9 zeigt das berechnete Frequenzspektrum der Amplitude eines akustischen Reflexionssignals eines Impulses am Ort des Sensors 13 für jede der drei vorausgehend erläuterten Phasen. Im Frequenzspektrum sind in Fig. 9 deutliche Verschiebungen von Maxima etwas oberhalb von 20 KHz und etwas oberhalb von 60 KHz zwischen der Phase A einerseits und den Phasen B und C andererseits erkennbar, während sich die Phasen B und C in diesen Frequenzbereichen nicht signifikant voneinander unterscheiden. Einen markanten Unterschied gegenüber der Phase B weist die Phase C jedoch in Form eines ausgeprägten Minimums etwas unterhalb von 70 KHz auf. Insgesamt sind somit alle drei in Fig. 8 gezeigten Phasen A, B und C anhand ihrer Frequenzspektren voneinander unterscheidbar. Die Erfindung erlaubt es also, Bereiche der Eindringtiefe eines Bohrwerkzeugs 15 in ein Werkstück 14 zu identifizieren.

Eine weitere mögliche Funktion der Erfindung veranschaulicht Fig. 10. In dieser ist ein bestimmter Bereich des berechneten Frequenzspektrums der akustischen Impedanz am Ort des Sensors 13 für drei verschiedene Längen eines Werkzeugs 3 dargestellt. Alle drei Kurven weisen in dem betrachteten Frequenzbereich ein charakteristisches Minimum auf, jedoch bei geringfügig voneinander abweichenden Frequenzen. Da durch eine Biegebelastung des Werkzeugs 3 senkrecht zur Mittelachse der Arbeitsspindel 1, die zugleich die Mittelachse des Werkzeugs 3 ist, bekanntlich eine Seite des Werkzeugs 3 gedehnt und die gegenüberliegende Seite gestaucht wird, entspricht eine Biegebelastung einer Variation der Länge des Werkzeugs 3 über dessen Querschnitt. Die Kurve mit dem mittleren Minimum in Fig. 10 ist der neutralen Faser eines gebogenen Werkzeugs 3 zugeordnet, die beiden anderen Kurven mit dem nach links bzw. nach rechts verschobenen Minimum der maximal gedehnten bzw. maximal gestauchten Seite.

Bei einer Rotation eines unter Biegebelastung stehenden Werkzeugs 3 im Betrieb der Arbeitsspindel 1 wird jede axiale Linie auf der Oberfläche des Werkzeugs 3 periodisch gedehnt und gestaucht, wodurch es im Vergleich zu einem Werkzeug 3 ohne Biegebelastung zu einer Verbreiterung besagten spektralen Minimums kommt.. Eine solche Verbreiterung ist somit ein Indiz für eine Biegebelastung des Werkzeugs 3, die durch eine fehlerhafte schräge Spannung des Werkzeugs 3 in der Spannvorrichtung 2 oder des bearbeiteten Werkstücks in der Werkstückspannvorrichtung der Bearbeitungsmaschine verursacht sein kann. Auch eine solche Fehlersituation kann somit mittels der Erfindung erkannt werden. Bei bestimmten Bearbeitungsvorgängen kann aber eine Biegebelastung vorbestimmten Ausmaßes des Werkzeugs 3 aber auch normal sein.

Die aus dem Sensorsignal durch die Auswertungseinrichtung abgeleiteten Informationen über den funktionalen Zustand der Einspeisungsvorrichtung und/oder des gespannten Werkzeugs werden an eine Steuereinrichtung der Bearbeitungsmaschine, deren Bestandteil die Arbeitsspindel 1 ist, übermittelt und von dieser zur Steuerung des Bearbeitungsprozesses verwendet. Insbesondere wird der Bearbeitungsprozess abgebrochen oder von vornherein nicht gestartet, wenn besagter funktionaler Zustand fehlerhaft ist. In diesem Fall werden von der Steuereinrichtung Maßnahmen zur Behebung des festgestellten Fehlers wie z.B. ein automatischer Wechsel eines als falsch oder defekt erkannten Werkzeugs 3 oder die Aktivierung einer Anzeige zur Benachrichtigung des Bedienpersonals der Bearbeitungsmaschine eingeleitet.

## Patentansprüche

1. Vorrichtung zur Überwachung einer Arbeitsspindel (1), mit einer Spannvorrichtung (2) zur Spannung eines Werkzeugs (3) an einem vorderen Ende der Arbeitsspindel (1), welche einen in der Axialrichtung der Arbeitsspindel (1) verlaufenden Kanal (6) zur Zufuhr einer Flüssigkeit zu einem gespannten Werkzeug (3) aufweist, und mit einer an einem hinteren Ende der Spannvorrichtung (2) angeordneten Einspeisungsvorrichtung (5) zur Einspeisung der Flüssigkeit in den Kanal (6), **dadurch gekennzeichnet, dass** die Vorrichtung einen an der Einspeisungsvorrichtung (5) angeordneten Sensor (13) zur Erfassung eines sich in dem Kanal (6) ausbreitenden akustischen Signals aufweist, dass die Vorrichtung einen Speicher aufweist, in welchem Kalibrationsdaten gespeichert sind, die mittels des Sensors (13) in verschiedenen vorbestimmten funktionalen Zuständen der Einspeisungsvorrichtung (5) und mindestens eines durch die Spannvorrichtung (2) an der Arbeitsspindel (1) gespannten Werkzeugs (3) erfasst wurden, und dass die Vorrichtung eine mit dem Sensor (13) verbundene Auswertungseinrichtung aufweist, die zur Ableitung von Information über den funktionalen Zustand der Einspeisungsvorrichtung (5) und/oder des gespannten Werkzeugs (3) aus dem durch den Sensor (13) erfassten akustischen Signal anhand eines Vergleichs von Parametern dieses Signals mit den gespeicherten Kalibrationsdaten eingerichtet ist.

2. Vorrichtung nach Anspruch 1, **dadurch gekennzeichnet, dass** die Einspeisungsvorrichtung (5) eine an der Spannvorrichtung (2) befestigbare Drehdurchführung (5) mit einem im Betrieb der Arbeitsspindel (1) nicht rotierenden hinteren Abschnitt (7) und einem im Betrieb der Arbeitsspindel mit der Spannvorrichtung (2) rotierenden vorderen Abschnitt (8) ist, die einen sich in beiden Abschnitten (7, 8) erstreckenden und am Übergang zwischen den beiden Abschnitten durch eine Dichtung (11) abgedichteten koaxialen Endabschnitt (9) des Kanals (6) bilden, und dass der Sensor (13) an dem hinteren Abschnitt (7) der Drehdurchführung (5) angeordnet ist.

3. Vorrichtung nach Anspruch 1 oder 2, **dadurch gekennzeichnet, dass** der Sensor (13) ein passiver Sensor ist, mittels dessen ein sich in dem Kanal (6) ausbreitendes akustisches Signal erfassbar ist.

4. Vorrichtung nach Anspruch 1 oder 2, **dadurch gekennzeichnet, dass** der Sensor (13) ein aktiver Sensor ist, mittels dessen ein akustisches Signal in den Kanal (6) einkoppelbar und ein aus dem Kanal (6) zu dem Sensor (13) reflektiertes akustisches Signal erfassbar ist.

5. Vorrichtung nach Anspruch 4, **dadurch gekennzeichnet, dass** das durch den aktiven Sensor in den Kanal (6) einkoppelbare Signal ein Impuls ist.

6. Vorrichtung nach einem der Ansprüche 1 bis 5, **dadurch gekennzeichnet, dass** die zum Vergleich mit gespeicherten Kalibrationsdaten vorgesehenen Parameter des erfassten akustischen Signals Parameter seines Frequenzspektrums sind.

7. Vorrichtung nach Anspruch 6, **dadurch gekennzeichnet, dass** die Parameter des Frequenzspektrums der Amplitudenverlauf oder einzelne Amplitudenwerte in mindestens einem vorbestimmten Frequenzband sind.

8. Vorrichtung nach einem der Ansprüche 1 bis 7, **dadurch gekennzeichnet, dass** die Information über den funktionalen Zustand eine Information über das Vorliegen eines Defekts an dem Werkzeug (3) enthält.

9. Vorrichtung nach einem der Ansprüche 2 bis 8, **dadurch gekennzeichnet, dass** die Information über den funktionalen Zustand eine Information über einen Defekt der Dichtung (11) der Drehdurchführung (5) enthält.

10. Vorrichtung nach einem der Ansprüche 2 bis 9, **dadurch gekennzeichnet, dass** die Information über den funktionalen Zustand eine Information über einen Defekt einer an dem hinteren Abschnitt (7) der Drehdurchführung (5) angeschlossenen Zufuhrleitung zur Zufuhr von Flüssigkeit von einer Flüssigkeitsquelle zu der Drehdurchführung (5) enthält.

11. Vorrichtung nach einem der Ansprüche 1 bis 10, **dadurch gekennzeichnet, dass** die Information über den funktionalen Zustand eine Information über die aktuelle Eindringtiefe eines als Werkzeug (3) gespannten Bohrers (15) in einem Werkstück (14) enthält.

12. Vorrichtung nach einem der Ansprüche 1 bis 11, **dadurch gekennzeichnet, dass** die Information über den funktionalen Zustand eine Information über die Form des Werkzeugs (3) enthält.

13. Vorrichtung nach einem der Ansprüche 1 bis 12, **dadurch gekennzeichnet, dass** die Information über den funktionalen Zustand eine Information über eine Biegebelastung des Werkzeugs (3) enthält.

## Claims

1. Device for monitoring a working spindle (1), with a clamping device (2) for clamping a tool (3) at a front end of the working spindle (1), which has a channel (6) running in the axial direction of the working spindle (1) for supplying a liquid to a clamped tool (3) and with a feed device (5) arranged at a rear end of the clamping device (2) for feeding the liquid into the channel (6), **characterized in that** the device has a sensor (13) arranged on the feed device (5) for detecting an acoustic signal propagating in the channel (6), **in that** the device has a memory in which calibration data are stored which have been detected by means of the sensor (13) in various predetermined functional states of the feed device (5) and of at least one tool (3) clamped on the working spindle (1) by the clamping device (2), and **in that** the device has an evaluation device connected to the sensor (13) which is set up for deriving information about the functional state of the feed device (5) and/or of the clamped tool (3) from the acoustic signal detected by the sensor (13) on the basis of a comparison of parameters of this signal with the stored calibration data.

2. Device according to claim 1, **characterized in that** the feed device (5) is a rotary feedthrough (5) which can be fixed to the clamping device (2) and has a rear section (7) which does not rotate during operation of the working spindle (1) and a front section (8) which rotates during operation of the working spindle, which rotary feedthrough (5) forms a coaxial end section (9) of the channel (6) extending in both sections (7, 8) and sealed by a sealing (11) at the transition between the two sections, and that the sensor (13) is arranged at the rear section (7) of the rotary feedthrough (5).

3. Device according to claim 1 or 2, **characterized in that** the sensor (13) is a passive sensor by means of which an acoustic signal propagating in the channel (6) can be detected.

4. Device according to claim 1 or 2, **characterized in that** the sensor (13) is an active sensor by means of which an acoustic signal can be coupled into the channel (6) and an acoustic signal reflected from the channel (6) to the sensor (13) can be detected.

5. Device according to claim 4, **characterized in that** the signal that can be coupled into the channel (6) by the active sensor is a pulse.

6. Device according to any one of claims 1 to 5, **characterized in that** the parameters of the detected acoustic signal provided for comparison with stored calibration data are parameters of its frequency spectrum.

7. Device according to claim 6, **characterized in that** the parameters of the frequency spectrum are the amplitude course or individual amplitude values in at least one predetermined frequency band.

8. Device according to any one of claims 1 to 7, **characterized in that** the information about the functional state includes an information about the presence of a defect on the tool (3).

9. Device according to any one of claims 2 to 8, **characterized in that** the information about the functional state includes an information about a defect of the sealing (11) of the rotary feedthrough (5).

10. Device according to any one of claims 2 to 9, **characterized in that** the information about the functional state includes an information about a defect of a supply line connected to the rear section (7) of the rotary feedthrough (5) for supplying liquid from a liquid source to the rotary feedthrough (5).

11. Device according to any one of claims 1 to 10, **characterized in that** the information about the functional state includes an information about the current penetration depth of a drill (15) clamped as tool (3) in a work piece (14).

12. Device according to any one of claims 1 to 11, **characterized in that** the information about the functional state includes an information about the shape of the tool (3).

13. Device according to any one of claims 1 to 12, **characterized in that** the information about the functional state includes an information about a bending load of the tool (3).

## Revendications

1. Dispositif pour la surveillance d'une broche de travail (1), comprenant un dispositif de serrage (2) pour le serrage d'un outil (3) sur une extrémité avant de la broche de travail (1), lequel présente un canal (6) s'étendant dans la direction axiale de la broche de travail (1) pour l'amenée d'un liquide à un outil (3) serré, et comprenant un dispositif d'introduction (5) disposé à une extrémité arrière du dispositif de serrage (2) pour introduire le liquide dans le canal (6), **caractérisé en ce que** le dispositif présente un capteur (13) disposé sur le dispositif d'introduction (5) pour la détection d'un signal acoustique se propageant dans le canal (6), que le dispositif présente une mémoire, dans laquelle des données d'étalonnage sont stockées, qui ont été détectées au moyen du capteur (13) dans différents états fonctionnels prédéfinis du dispositif d'introduction (5) et d'au moins un outil (3) serré par le dispositif de serrage (2) sur la broche de travail (1), et que le dispositif présente un système d'évaluation relié au capteur (13), qui est conçu pour la déduction d'informations sur l'état fonctionnel du système d'introduction (5) et/ou de l'outil (3) serré à partir du signal acoustique détecté par le capteur (13) à l'aide d'une comparaison de paramètres de ce signal aux données d'étalonnage stockées.

2. Dispositif selon la revendication 1, **caractérisé en ce que** le dispositif d'introduction (5) est un passage tournant (5) pouvant être fixé sur le dispositif de serrage (2) avec une partie arrière (7) non tournante lors du fonctionnement de la broche de travail (1) et une partie avant (8) tournant avec le dispositif de serrage (2) lors du fonctionnement de la broche de travail, qui forment une partie d'extrémité (9) coaxiale du canal (6) s'étendant dans les deux parties (7, 8) et étanchéifiée sur la transition entre les deux parties par un joint d'étanchéité (11), et que le capteur (13) est disposé sur la partie arrière (7) du passage tournant (5).

3. Dispositif selon la revendication 1 ou 2, **caractérisé en ce que** le capteur (13) est un capteur passif, au moyen duquel un signal acoustique se propageant dans le canal (6) peut être détecté.

4. Dispositif selon la revendication 1 ou 2, **caractérisé en ce que** le capteur (13) est un capteur actif, au moyen duquel un signal acoustique peut être injecté dans le canal (6) et un signal acoustique réfléchi à partir du canal (6) vers le capteur (13) peut être détecté.

5. Dispositif selon la revendication 4, **caractérisé en ce que** le signal pouvant être injecté dans le canal (6) par le capteur actif est une impulsion.

6. Dispositif selon l'une quelconque des revendications 1 à 5, **caractérisé en ce que** les paramètres du signal acoustique détecté prévus pour la comparaison aux données d'étalonnage stockées sont les paramètres de son spectre de fréquence.

7. Dispositif selon la revendication 6, **caractérisé en ce que** les paramètres du spectre de fréquence sont la variation d'amplitude ou des valeurs d'amplitude individuelles dans au moins une bande de fréquences prédéfinie.

8. Dispositif selon l'une quelconque des revendications 1 à 7, **caractérisé en ce que** l'information sur l'état fonctionnel contient une information sur la présence d'un défaut sur l'outil (3) .

9. Dispositif selon l'une quelconque des revendications 2 à 8, **caractérisé en ce que** l'information sur l'état fonctionnel contient une information sur un défaut du joint (11) du passage tournant (5).

10. Dispositif selon l'une quelconque des revendications 2 à 9, **caractérisé en ce que** l'information sur l'état fonctionnel contient une information sur un défaut d'une conduite d'amenée raccordée à la partie arrière (7) du passage tournant (5) pour l'amenée de liquide à partir d'une source de liquide vers le passage tournant (5).

11. Dispositif selon l'une quelconque des revendications 1 à 10, **caractérisé en ce que** l'information sur l'état fonctionnel contient une information sur la profondeur de pénétration actuelle d'un foret (15) serré en tant qu'outil (3) dans une pièce (14).

12. Dispositif selon l'une quelconque des revendications 1 à 11, **caractérisé en ce que** l'information sur l'état fonctionnel contient une information sur la forme de l'outil (3).

13. Dispositif selon l'une quelconque des revendications 1 à 12, **caractérisé en ce que** l'information sur l'état fonctionnel contient une information sur une charge de flexion de l'outil (3) .
